# EUROPEAN PATENT SPECIFICATION

(11) **EP 3 394 518 B1**
(45) Date of publication and mention of the grant of the patent: **04.03.2020**
(21) Application number: 16847610.9
(22) Date of filing: 19.12.2016
(51) Int. Cl.: F24D 17/00, F24D 19/10, F28D 20/00, G05D 23/00

(54) **THERMAL EXCHANGE AND THERMAL STRATIFICATION SYSTEM FOR THE FLUID CONTAINED IN A TANK AND HOT WATER TANK COMPRISING SAID SYSTEM**
WÄRMEAUSTAUSCH- UND WÄRMESCHICHTUNGSSYSTEM FÜR DIE IN EINEM BEHÄLTER ENTHALTENE FLÜSSIGKEIT UND WARMWASSER BEHÄLTER MIT DIESEM SYSTEM
SYSTÈME D'ÉCHANGE THERMIQUE ET DE STRATIFICATION THERMIQUE POUR LE FLUIDE CONTENU DANS UN RÉSERVOIR ET RÉSERVOIR D'EAU CHAUDE COMPRENANT LEDIT SYSTÈME

(30) Priority: 24.12.2015 IT UB20159146
(43) Date of publication of application: 31.10.2018
(73) Proprietor: Cordivari S.r.L., 64020 Morro d'Oro (TE) (IT)
(72) Inventor: BONOLIS, Alessandro, 64020 Morro D'oro (TE) (IT)
(74) Representative: Mulas, Chiara
(86) International application number: PCT/IT2016/000300
(87) International publication number: WO 2017/109807

(56) References cited:
- EP-A1- 2 848 875
- US-A- 4 027 821

## Description

The present invention relates to a thermal exchange and thermal stratification system for the fluid to be heated, in particular sanitary water, within a storage tank. Moreover, the present invention relates to a hot water tank comprising said system.

More specifically, the present invention concerns to a thermal stratification system that allows to input inside a tank a secondary fluid heated following heat exchange with a primary fluid outside of said tank. Such inlet happening with flow rate and temperature such as not to create mixing and preserving the thermal stratification of the secondary fluid inside the tank.

By thermal stratification it is meant the natural tendency of a fluid to "stratify" inside a container, e.g. a tank, its temperature so as to increase from bottom to top and with high temperature gradients between the upper, warmer parte, and the lower, colder part.

In order to preserve the thermal stratification, it is tried preventing the fluid introduced into the tank from having different temperatures, thus generating a mixing and turbulence inside the tank itself, and compromising its efficiency.

The present invention is included in the closed vessel heating systems field, in which the tank containing the fluid to be heated is always under pressure.

Under the present state of the art, there are thermal stratification systems of the fluid contained in closed vessel tanks, employing pipes and heat exchangers aimed at and configured so as to input the heated fluid at different heights of the tank, so as to present the same temperature of the fluid already contained in the tank, to avoid the mixing and turbulence within said tanks.

However, such known systems require a system to regulate the inlet of said fluid inside said tank so as to preserve the thermal stratification, since said fluid as a consequence of said thermal exchange could be under different conditions and variations of flow rate and temperature which, if not regulated, do not allow to maintain the thermal stratification. At the state of the art these known systems require, therefore, suitably designed heat exchange systems and piping and circuits outside or inside the tank.

Document EP 2873933 A1 and EP 2848875 A1 describe a system according to the preamble of claim 1 of the present application.

It is the object of the present invention solving the problems of the known art, in order to obtain a heat exchange and stratification system that can be easily applied to hot water tanks or existing heat exchange systems, ensuring optimal thermal stratification of the fluid contained within the tank.

The invention is defined in claim 1. The dependent claims define preferred embodiments of the invention.

According to the present invention, a thermal exchange and thermal stratification system for a secondary fluid contained in a tank, such as a hot water tank is given, said tank having a top portion and a lower portion, said system comprising a secondary circuit, for the flow of the secondary fluid, said secondary circuit being apt at being in fluid connection with the top portion and the lower portion of said tank, said system further comprising a circulation pump, apt to act on said secondary circuit for the circulation of said secondary fluid from the lower portion to the top portion of said tank through said secondary circuit, a heat exchanger, apt to act on a portion of said secondary circuit for heating said secondary fluid before its introduction into the top portion of said tank, and a thermostatic mixing valve, apt to act on said secondary circuit so that, during use, said thermostatic mixing valve being configured to adjust the temperature and the flow rate of said secondary fluid through said secondary circuit according to the thermal exchange with said heat exchanger for keeping the thermal stratification of the secondary fluid within said tank, wherein said thermostatic mixing valve has a first inlet opening or warm inlet opening, in fluid connection with the portion of the secondary circuit apt at being in fluid connection with the top portion of the tank, a second inlet opening or cold inlet opening, in fluid connection with the portion of the secondary circuit apt at being in fluid connection with the bottom portion of the tank, and an outlet opening, in fluid connection with a portion of the secondary circuit in fluid communication with the portion of the secondary circuit in correspondence with said heat exchanger, and wherein said thermostatic mixing valve is configured so that, during use, when the temperature of the secondary fluid in correspondence of said thermostatic mixing valve equals to or is lower than a first pre-set temperature, said thermostatic mixing valve prevents the flow of said secondary fluid from the lower portion of said tank, in order to allow the remaining secondary fluid to circulate in said secondary circuit, only between said heat exchanger and said thermostatic mixing valve passing entirely by the first inlet opening to the outlet opening, for heating said secondary fluid, when the temperature of the secondary fluid in correspondence of said thermostatic mixing valve is higher than said first pre-set temperature, said thermostatic mixing valve varies the flow rate of said secondary fluid through it in a way proportional to the difference between the temperature of the secondary fluid and the pre-set temperature, for the introduction of said secondary fluid in the top portion of said tank for preserving the thermal stratification of said secondary fluid within said tank.

Still according to the invention, said thermostatic mixing valve has a first inlet opening or warm inlet opening, a second inlet opening or cold inlet opening, and an outlet opening. Said secondary circuit has a first opening or lower opening, apt at being in fluid connection with the lower part of the tank for the intake of the secondary fluid from said tank, and a second opening or top opening, apt at being in fluid connection with the top part of the tank for the introduction of the secondary fluid in the tank. Preferably, the secondary circuit further comprises a first portion or thermal exchange portion in correspondence of said heat exchanger for heating said secondary fluid, a second portion, able to put in fluid connection said lower opening with said second intake opening of said thermostatic mixing valve, a third portion, able to put in fluid connection said outlet opening of said thermostatic mixing valve and said first portion of the secondary conduit, and a fourth portion able to put in fluid connection said first portion both with said warm inlet opening of said thermostatic mixing valve and both with said top opening. During use, said thermostatic mixing valve is configured to adjust the temperature and the flow rate of said secondary fluid by opening, partially or totally closing said second inlet opening according to the temperature of said secondary fluid in correspondence of said first inlet opening for preserving the thermal stratification of the secondary fluid within said tank.

Preferably, said thermostatic mixing valve is configured so that, during use, when the temperature of the secondary fluid in correspondence of the warm inlet opening of said thermostatic mixing valve is equal or is lower than a first pre-set temperature, said thermostatic mixing valve closes or maintains closed said second inlet opening, preventing the flow of said secondary fluid from the lower opening, in order to allow the secondary fluid to flow between the third, first and fourth portion of the secondary circuit for heating said secondary fluid within said secondary circuit, when the temperature of the secondary fluid in correspondence of the warm inlet opening of said thermostatic mixing valve is higher than said pre-set temperature, said thermostatic mixing valve opens or maintains partially or totally opened said second inlet opening, varying the flow-rate of said secondary fluid through said second inlet opening in a way proportional to the difference between the temperature of the secondary fluid in correspondence of the warm inlet opening and the pre-set temperature, for the introduction of said heated secondary fluid in said second opening for the thermal stratification within said tank.

According to a preferred embodiment of the invention, said heat exchanger comprises a primary circuit for the flow of a heated primary thermal-carrier fluid by means of external heating means, for example a heat pump, said primary circuit being in direct or indirect thermal contact with said thermal exchange portion of said secondary circuit in correspondence of said heat exchanger for heating said secondary fluid.

Preferably, said circulation pump is arranged in correspondence of the third portion of the secondary circuit in order to intake the secondary fluid from the second portion and/or from the fourth portion of the secondary circuit.

Preferably, said system can further comprise an adjustment system of the temperature of said secondary fluid in said secondary circuit according to the temperature detected at one or more height levels of said tank, in order to interrupt the heating of said secondary fluid in correspondence of said heat exchanger when reaching a second pre-set temperature at a determined level of said tank.

Particularly, said adjustment system may comprise detecting means, for example probes, arranged at one or more levels of said tank, able to detect the temperature of said secondary fluid at the respective level of said tank.

Furthermore, according to a preferred embodiment of the invention, said second portion of the secondary circuit is apt at being inserted within said tank or is apt at being arranged outside said tank.

Preferably, said thermostatic mixing valve is directly connected to said circulation pump. It is a further object of the present invention a hot water tank comprising a tank, having a lower portion and a top portion, and a thermal exchange and thermal stratification system according to any one of the claims 1-9.

Preferably, said tank is of a closed vessel type.

The invention will be now described, for illustrative but not limitative purposes, with particular reference to the figures of the enclosed drawings, wherein:
figure 1 shows a hydraulic diagram of the thermal exchange and stratification system for tanks according to the invention;
figure 2 shows a perspective view of a first embodiment of the thermal exchange and stratification system according to the invention applied to a hot water tank;
figure 3 shows a top view of the thermal exchange system of figure 2;
figure 4 shows a perspective view of a second embodiment of the thermal exchange and stratification system according to the invention;
figures 5a - 5f show front views in thermo graphic vision during different time phases in succession of the inlet of a fluid inside the tank following to the heating by a thermal exchange system according to the prior art;
figures 6a - 6f show front views in thermo graphic vision during different time phases in succession of the inlet of a fluid inside the tank following to the heating by a thermal exchange system according to the invention;
figure 7 shows a first graph of the temperature variation, as a function of time, of the secondary fluid heated by said thermal exchange system according to the prior art; and
figure 8 shows a second graph of the temperature variation, as a function of time, of the secondary fluid heated by heat exchange under the same conditions of said heat exchange system according to the known technique and input in the tank by said heat exchange system and the stratification thermal system according to the invention.

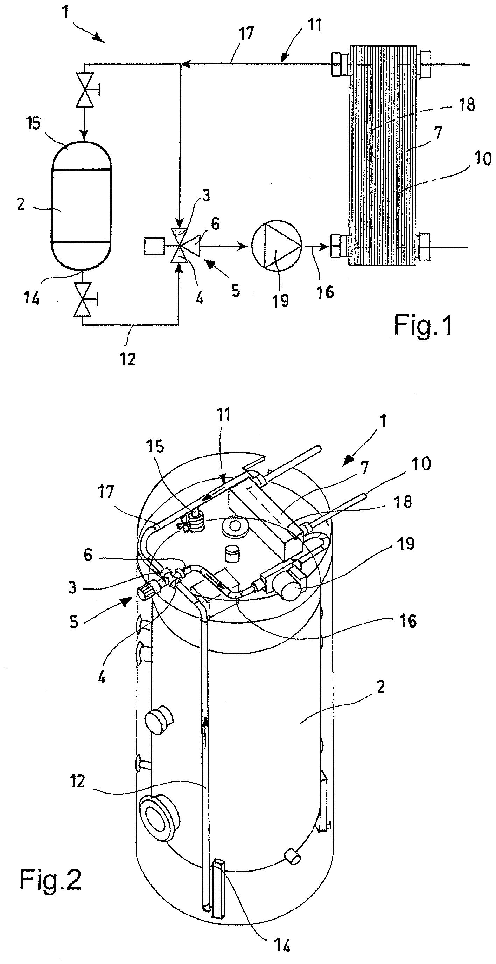

Making reference to figures 1 - 3, it is observed the thermal exchange and stratification system according to the invention, indicated by the reference number 1. Said system 1 is adapted to be applied to a storage tank 2 in a closed vessel hot water tank containing a fluid to be heated, for example sanitary water. In the specific embodiment, the fluid to be heated is a secondary fluid to be heated through thermal exchange with a further heat transfer fluid, known as primary fluid.

The thermal exchange and stratification system 1 according to the invention provides a heat exchanger 7, comprising a primary circuit 10, through which flows a primary heat transfer medium heated, for example by means of heating pumps or other heating systems. Said primary fluid being water and being for example aimed at heating a house. In other embodiments, said heat exchanger 7 may provide other heating systems for the secondary fluid. Furthermore, the system 1 provides a secondary circuit 11, for the flowing of the fluid to be heated or secondary fluid, having a first portion 18 in direct or indirect thermal contact with said primary circuit 10 in correspondence of said heat exchanger 7, for heating said secondary fluid. Said secondary circuit 11 is configured so as to put in fluid communication a lower opening 14 connected to the lower portion of said tank 2 and an upper opening 15 connected to the upper portion of said tank 2. In correspondence of said secondary circuit 11 it is provided a circulation pump 19 able to circulate the secondary fluid in said secondary circuit 11.

Furthermore, the system 1 according to the invention provides a thermostatic mixing valve 5 suitable to act on said secondary circuit 11 so that, during use, said thermostatic valve 5 regulates the temperature and the flow rate of said fluid through said secondary circuit secondary 11 as a function of the thermal exchange with said heat exchanger 7 to maintain the thermal stratification of the secondary fluid inside said tank 2.

According to the invention, the thermostatic valve 5 has a first inlet or warm inlet opening 3, a second inlet or cold inlet opening 4, and an outlet opening 6.

Said secondary circuit 11 has a second portion 12 able to put in fluid communication of said lower opening 14 connected to the lower portion of said tank 2 with said second delivery opening 4 of said mixing valve 5. Furthermore, said secondary circuit 11 has a third portion 16 able to put in fluid communication of said outlet flow 6 of said mixing valve 5 and the first portion 18, and a fourth portion 17 able to put in fluid communication with said first portion 18 of said hot flow of said mixing valve 3 and with said upper opening 15 connected with the upper portion of said tank 2.

In particular, the circulating pump 19 is preferably positioned in correspondence of the third portion 16 of the secondary circuit 11 to suck the fluid to be heated from the first opening 14 and/or of the fourth portion 17 of the secondary circuit 11.

The thermal exchange system 1 according to the invention is configured in such a way that when the temperature TC of the secondary fluid at the warm inlet 3 of said mixing valve 5 equals or is lower than a first set temperature T1 for the fluid temperature TU in correspondence of the outlet opening 6 of said thermostatic mixing valve 5, said mixing valve 5 closes or keeps closed said second delivery opening 4, preventing the flow, of said secondary fluid, the low temperature, through the lower opening 14 connected to the lower portion of the tank 2 and through the upper opening 15 connected to the upper portion of the tank 2. In this condition the secondary fluid circulates only between the heat exchanger 7 and the thermostatic mixing valve 5 passing entirely by the warm inlet 3 to the outlet opening 6 and thus there is no flow, or flow rate, to and from said tank 2.

When, as a result of the thermal exchange, the temperature TC of the warm inlet opening 3 exceeds said first temperature T1, said thermostatic mixing valve 5 partially or totally opens the cold opening flow 4 by varying the flow rate of the flow in a manner proportional to the difference between the temperature TC of the warm opening 3 and the set temperature T1 for the temperature TU of the fluid at the outlet opening 6.

In consequence of the above, there is a flow, through said lower opening 14 and the upper opening 15 which involves inlet of said secondary fluid in said tank 2 through the upper opening 15 at the temperature TC of the warm opening 3, that, on the basis of the operation described in the above, is higher or equal to the set temperature T1 for the output 6 temperature TU of the thermostatic mixing valve 5 and with a flow, partial with respect to the total flow at the opening 6, used to obtain the thermal exchange of said secondary fluid with said primary fluid and proportional to the difference between said temperature TC and said set temperature T1 .

Thus, according to the invention, by setting a suitable temperature T1 as outlet 6 temperature TU of the thermostatic mixing valve 5, it is obtained by introducing said secondary fluid in the upper part of said tank 2, at the wished temperature, greater than or equal to the set temperature T1 , and with a flow, automatically and simultaneously set by the thermostatic mixing valve 5 in such a way not to influence the thermal stratification of the tank, regardless of the temperature and flow, or flow rate, conditions, of said secondary fluid and primary heat exchange, i.e. irrespective of the conditions to which said thermal exchange takes place, such as changes in temperature and/or flow rate of the primary fluid and the secondary fluid.

Therefore, the system according to the invention advantageously allows providing a system for adjusting the flow and the temperature when entering into a tank of a secondary fluid which is heated by means of a any generic thermal exchange system with a primary fluid under variable conditions and non-controlled flow rate and temperature, so that said input preserves the thermal stratification inside said tank.

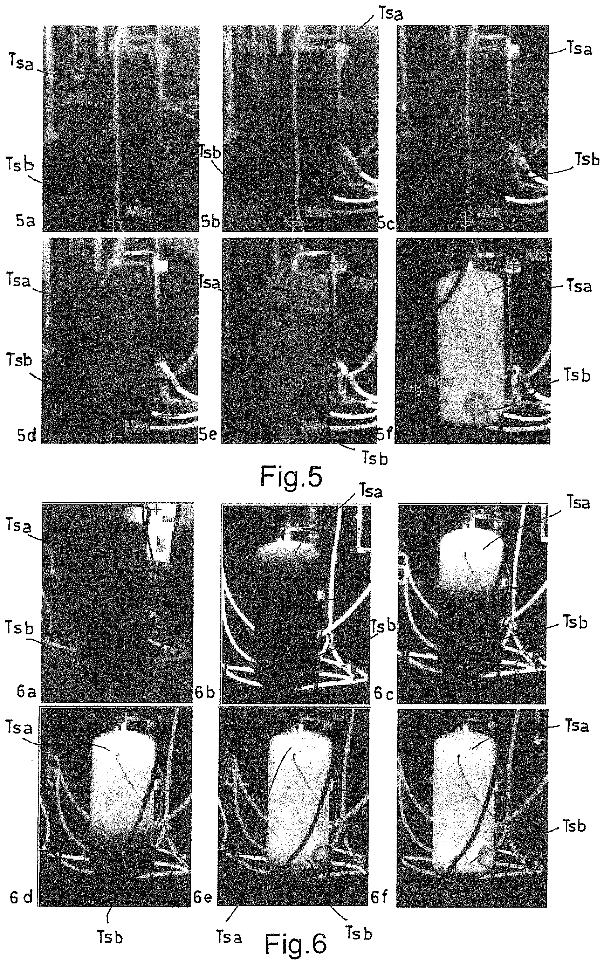

Comparing the figures 5a - 5f with the figures 6a - 6f it is noted that, in the absence of said thermal stratification system according to the invention, the secondary fluid coming directly from said thermal exchange with said primary fluid, and introduced in the upper portion of the tank 2 through the opening 15 with temperature and flow, or flow rate, deriving from said thermal exchange and not adjusted by the thermostatic mixing valve 5 of the system 1 according to the invention, creates a mixing within the tank and does not allow the thermal stratification.

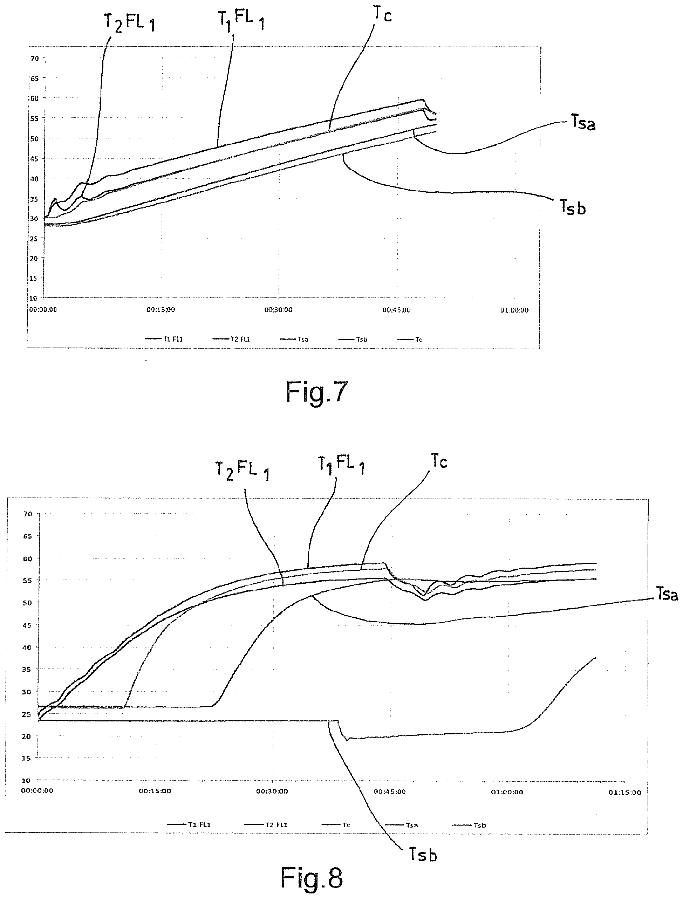

As can be observed from a comparison of graphs of figures 7 and 8, in the thermal exchange and stratification exchange system according to the invention, the temperature TC of the warm opening 3 rises much more quickly (Figure 8) compared to the same temperature TC in the same thermal exchange system according to the prior art (figure 7), which indicates that the heating of the fluid placed in the tank is quicker. Furthermore, in the thermal exchange and thermal stratification system according to the invention, said temperature TC (figure 8) is constantly included between the delivery and return temperatures of the primary fluid, respectively T1 FL1 and T2 FL1, while in the thermal exchange system according to the prior art under the same conditions, without said thermal stratification system (figure 7), said temperature TC is almost coincident with the return temperature T2 FL1 of the primary fluid, indicating that in the thermal and stratification exchange system according to the invention (fig. 8) said secondary fluid reaches, under the same conditions, higher temperatures, i.e. the thermal exchange is more efficient.

Furthermore, from the comparison of the graphs of figures 7 and 8, it can be noted that, in the thermal exchange and thermal stratification system according to the invention (figure 8) the temperature Tsb, detected in the lower part of the tank, increases quite some time after the temperature Tsa, detected in the upper part of the tank, maintaining a high temperature gradient between the upper part and the lower part of the tank for the entire first period until TSB does not begin increasing, indicating that there is a perfect thermal stratification. Conversely, in the thermal exchange system according to the prior art without said thermal stratification system (figure 7) said temperatures Tsa and Tsb increase simultaneously, maintaining a low temperature gradient between the upper part and the lower part of the tank, indicating that there is not a good thermal stratification, confirming the above, evidenced by a comparison of figures 5a - 5f with figures 6a - 6f.

Preferably, the thermal and stratification exchange system according to the invention may further comprise an adjustment and control system of the thermal exchange of said secondary fluid with said primary fluid, as a function of the temperature detected by detection means, such as probes, provided in a plurality of positions of said tank, so as to stop said thermal exchange to reach the wished temperature at a given level of said tank, corresponding to the position of a specific probe, allowing, by virtue of the thermal stratification in said tank, of not having to heat said fluid even below said level of said probe.

Particularly, the regulation and control system is able to stop said thermal exchange by electronic, electro-mechanical, or thermo mechanical actuators, when a second set temperature T2 is reached in correspondence of one or more set levels of said tank.

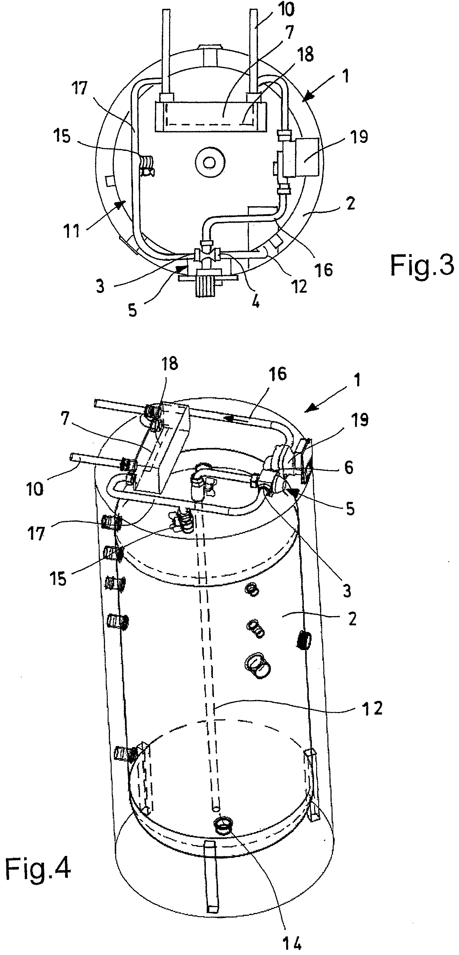

The embodiment of the thermal exchange and thermal stratification system 1 according to the invention of figure 4 differs from the previously described system by the fact that said second portion 12 of the secondary circuit 11 is inserted inside said tank 2 instead of being outside the same, in order to have an easier production, as to realize said second portion 12, which connects the lower opening 14 with the delivery opening 4 of the mixing valve 5, it is not necessary to suitably align a pipe so that it passes outside the tank. Said second portion 12 passing through the tank 2 is in any case accessible for inspection and replacement while remaining within the maximum dimensions of the whole product.

Furthermore, in the embodiment of figure 4, the mixing valve 5 is directly connected to the circulating pump 19, thus reducing the overall dimensions and optimizing the fittings.

In the foregoing preferred embodiments and the variants of the present invention have been suggested, but it is to be understood that one skilled in the art can introduce modifications and changes, without departing from the relevant scope, as defined by the enclosed claims.

## Claims

1. Thermal exchange and thermal stratification system (1) for a secondary fluid contained in a tank (2), such as a hot water tank, said tank (2) having a top portion and a lower portion,
said system (1) comprising a secondary circuit (11), for the flow of the secondary fluid, said secondary circuit (11) being apt at being in fluid connection with the top portion and the lower portion of said tank (2),
said system (1) further comprising a circulation pump (19), apt to act on said secondary circuit (11) for the circulation of said secondary fluid from the lower portion to the top portion of said tank (2) through said secondary circuit (11), a heat exchanger (7), apt to act on a portion (18) of said secondary circuit (11) for heating said secondary fluid before its introduction into the top portion of said tank (2), and a thermostatic mixing valve (5), apt to act on said secondary circuit (11) so that, during use, said thermostatic mixing valve (5) adjusts the temperature and the flow rate of said secondary fluid through said secondary circuit (11) according to the thermal exchange with said heat exchanger (7) for keeping the thermal stratification of the secondary fluid within said tank (2),
said system (1) being **characterized in that** said thermostatic mixing valve (5) has a first inlet opening or warm inlet opening (3), in fluid connection with the portion (17) of the secondary circuit (11) apt at being in fluid connection with the top portion of the tank (2), a second inlet opening or cold inlet opening (4), in fluid connection with the portion (12) of the secondary circuit (11) apt at being in fluid connection with the lower portion of the tank (2), and an outlet opening (6), in fluid connection with a portion (16) of the secondary circuit (11) in fluid connection with the portion (18) of the secondary circuit (11) in correspondence with said heat exchanger (7), and **in that** said thermostatic mixing valve (5) is configured so that, during use,
when the temperature (Tc) of the secondary fluid in correspondence of said thermostatic mixing valve (5) equals to or is lower than a first pre-set temperature (T1), said thermostatic mixing valve (5) prevents the flow of said secondary fluid from the lower portion of said tank (2), in order to allow the remaining secondary fluid to circulate in said secondary circuit (11), only between said heat exchanger (7) and said thermostatic mixing valve (5) passing entirely by the first inlet opening (3) to the outlet opening (6), for heating said secondary fluid,
when the temperature (Tc) of the secondary fluid in correspondence of said thermostatic mixing valve (5) is higher than said first pre-set temperature (T1), said thermostatic mixing valve (5) varies the flow rate of said secondary fluid through it in a way proportional to the difference between the temperature (Tc) of the secondary fluid and the pre-set temperature (T1), for the introduction of said secondary fluid in the top portion of said tank (2) for preserving the thermal stratification of said secondary fluid within said tank (2).

2. System (1) according to the preceding claim, **characterized in that** said secondary circuit (11) has a first opening or lower opening (14), apt at being in fluid connection with the lower part of the tank (2) for the intake of the secondary fluid from said tank (2), and a second opening or top opening (15), apt at being in fluid connection with the top part of the tank (2) for the introduction of the secondary fluid in the tank (2), **in that** said secondary circuit (11) further comprises a first portion or thermal exchange portion (18) in correspondence of said heat exchanger (7) for heating said secondary fluid, a second portion (12), able to put in fluid connection said lower opening (14) with said second intake opening (4) of said thermostatic mixing valve (5), a third portion (16), able to put in fluid connection said outlet opening (6) of said thermostatic mixing valve (5) and said first portion (18) of the secondary conduit (11), and a fourth portion (17) able to put in fluid connection said first portion (18) both with said warm inlet opening (3) of said thermostatic mixing valve (5) and both with said top opening (15), said system (1) being configured so that, during use, said thermostatic mixing valve (5) adjusts the temperature and the flow rate of said secondary fluid by opening, partially or totally closing said second inlet opening (4) according to the temperature (Tc) of said secondary fluid in correspondence of said first inlet opening (3) for preserving the thermal stratification of the secondary fluid within said tank (2).

3. System (1) according to the previous claim, **characterized in that** said thermostatic mixing valve (5) is configured so that, during use,
when the temperature (Tc) of the secondary fluid in correspondence of the warm inlet opening (3) of said thermostatic mixing valve (5) is equal or is lower than a first pre-set temperature (T1), said thermostatic mixing valve (5) closes or maintains closed said second inlet opening (4), preventing the flow of said secondary fluid from the lower opening (14), in order to allow the secondary fluid to flow between the third (16), first (18) and fourth (17) portion of the secondary circuit (11) for heating said secondary fluid within said secondary circuit (11),
when the temperature (Tc) of the secondary fluid in correspondence of the warm inlet opening (3) of said thermostatic mixing valve (5) is higher than said pre-set temperature (T1), said thermostatic mixing valve (5) opens or maintains partially or totally opened said second inlet opening (4), varying the flow-rate of said secondary fluid through said second inlet opening (4) in a way proportional to the difference between the temperature (Tc) of the secondary fluid in correspondence of the warm inlet opening (3) and the pre-set temperature (T1), for the introduction of said heated secondary fluid in said second opening (15) for thermal stratification within said tank (2).

4. System (1) according to any one of the previous claims, **characterized in that** said heat exchanger (7) comprises a primary circuit (10) for the flow of a heated primary thermal-carrier fluid by means of external heating means, for example a heat pump, said primary circuit (10) being in direct or indirect thermal contact with said thermal exchange portion (18) of said secondary circuit (11) in correspondence of said heat exchanger (7) for heating said secondary fluid.

5. System (1) according to claim 3 or 4, when dependent from claim 3, **characterized in that** said circulation pump (19) is arranged in correspondence of the third portion (16) of the secondary circuit (11) in order to intake the secondary fluid from the second portion (12) and/or from the fourth portion (17) of the secondary circuit (11).

6. System (1) according to any one of the preceding claims, **characterized in** further comprising an adjustment system of the temperature of said secondary fluid in said secondary circuit (11) according to the temperature detected at one or more height levels of said tank (2), in order to interrupt the heating of said secondary fluid in correspondence of said heat exchanger (7) when reaching a second pre-set temperature (T₂) at a determined level of said tank (2).

7. System (1) according to the previous claim, **characterized in that** said adjustment system comprises detecting means, for example probes, arranged at one or more levels of said tank (2), able to detect the temperature of said secondary fluid at the respective level of said tank (2).

8. System (1) according to any one of the preceding claims, when dependent from claim 2, **characterized in that** said second portion (12) of the secondary circuit (11) is apt at being inserted within said tank (2) or is apt at being arranged outside said tank (2).

9. System (1) according to any one of the previous claims, **characterized in that** said thermostatic mixing valve (5) is directly connected to said circulation pump (19).

10. Hot water tank comprising a tank (2), having a lower portion and a top portion, and a thermal exchange and thermal stratification system (1) according to any one of the previous claims.

11. Hot water tank according to the previous claim, **characterized in that** said tank (2) is of a closed vessel type.

## Patentansprüche

1. Wärmetausch- und Wärmeschichtungssystem (1) für ein Sekundärfluid, das in einem Speicher (2) enthalten ist, wie z. B. in einem Warmwasserspeicher, wobei der Speicher (2) einen oberen Abschnitt und einen unteren Abschnitt aufweist,
wobei das System (1) einen Sekundärkreislauf (11) für den Durchfluss des Sekundärfluids umfasst, wobei der Sekundärkreislauf (11) geeignet ist, in Fluidverbindung mit dem oberen Abschnitt und dem unteren Abschnitt des Speichers (2) zu stehen,
wobei das System (1) weiter eine Zirkulationspumpe (19) umfasst, die geeignet ist, auf den Sekundärkreislauf (11) für die Zirkulation des Sekundärfluids von dem unteren Abschnitt zu dem oberen Abschnitt des Speichers (2) durch den Sekundärkreislauf (11) einzuwirken, einen Wärmetauscher (7), der geeignet ist, auf einen Abschnitt (18) des Sekundärkreislaufs (11) zum Erwärmen des Sekundärfluids vor seiner Einführung in den oberen Abschnitt des Speichers (2) einzuwirken, und ein thermostatisches Mischventil (5), das geeignet ist, auf den Sekundärkreislauf (11) einzuwirken, sodass das thermostatische Mischventil (5) während dem Gebrauch die Temperatur und die Durchflussmenge des Sekundärfluids durch den Sekundärkreislauf (11) gemäß dem Wärmetausch mit dem Wärmetauscher (7) verstellt, um die thermale Schichtung des Sekundärfluids innerhalb des Speichers (2) beizubehalten,
wobei das System (1) **dadurch gekennzeichnet ist, dass** das thermostatische Mischventil (5) eine erste Einlassöffnung oder Warmeinlassöffnung (3) aufweist, die in Fluidverbindung mit dem Abschnitt (17) des Sekundärkreislaufs (11) steht, die geeignet ist, in Fluidverbindung mit dem oberen Abschnitt des Speichers (2) zu stehen, eine zweite Einlassöffnung oder Kalteinlassöffnung (4), die in Fluidverbindung mit dem Abschnitt (12) des Sekundärkreislaufs (11) steht, die geeignet ist, in Fluidverbindung mit dem unteren Abschnitt des Speichers (2) zu stehen, und eine Auslassöffnung (6), die in Fluidverbindung mit einem Abschnitt (16) des Sekundärkreislaufs (11) steht, der in Fluidverbindung mit dem Abschnitt (18) des Sekundärkreislaufs (11) entsprechend dem Wärmetauscher (7) steht, und dadurch, dass das thermostatische Mischventil (5) konfiguriert ist, sodass während dem Gebrauch,
wenn die Temperatur (Tc) des Sekundärfluids entsprechend dem thermostatischen Mischventil (5) gleichwertig oder niedriger als eine erste voreingestellte Temperatur (T1) ist, das thermostatische Mischventil (5) den Durchfluss des Sekundärfluids von dem unteren Abschnitt des Speichers (2) verhindert, um es dem restlichen Sekundärfluid zu erlauben, in dem Sekundärkreislauf (11) nur zwischen dem Wärmetauscher (7) und dem thermostatischen Mischventil (5) zu zirkulieren, wobei es vollständig an der ersten Einlassöffnung (3) vorbei bis zu der Auslassöffnung (6) läuft, um das Sekundärfluid zu erwärmen,
wenn die Temperatur (Tc) des Sekundärfluids entsprechend dem thermostatischen Mischventil (5) höher als die erste voreingestellte Temperatur (T1) ist, das thermostatische Mischventil (5) die Durchflussmenge des Sekundärfluids durch dieses hindurch auf eine Weise variiert, die im Verhältnis zu dem Unterschied zwischen der Temperatur (Tc) des Sekundärfluids und der voreingestellten Temperatur (T1) zum Einführen des Sekundärfluids in den oberen Abschnitt des Speichers (2) zum Aufrechterhalten der Wärmeschichtung des Sekundärfluids innerhalb des Speichers (2) liegt.

2. System (1) nach dem vorstehenden Anspruch, **dadurch gekennzeichnet, dass** der Sekundärkreislauf (11) eine erste Öffnung oder untere Öffnung (14) aufweist, die geeignet ist, in Fluidverbindung mit dem unteren Teil des Speichers (2) zum Einlass des Sekundärfluids von dem Speicher (2) zu stehen, und eine zweite Öffnung oder obere Öffnung (15), die geeignet ist, in Fluidverbindung mit dem oberen Teil des Speichers (2) zum Einführen des Sekundärfluids in den Speicher (2) zu stehen, dadurch, dass der Sekundärkreislauf (11) weiter einen ersten Abschnitt oder Wärmetauschabschnitt (18) entsprechend dem Wärmetauscher (7) zum Erwärmen des Sekundärfluids umfasst, einen zweiten Abschnitt (12), der in der Lage ist, die untere Öffnung (14) mit der zweiten Einlassöffnung (4) des thermostatischen Mischventils (5) in Fluidverbindung zu bringen, einen dritten Abschnitt (16), der in der Lage ist, die Auslassöffnung (6) des thermostatischen Mischventils (5) und den ersten Abschnitt (18) des Sekundärkreislaufs (11) in Fluidverbindung zu bringen, und einen vierten Abschnitt (17), der in der Lage ist, den ersten Abschnitt (18) sowohl mit der Warmeinlassöffnung (3) des thermostatischen Mischventils (5) als auch mit der oberen Öffnung (15) in Fluidverbindung zu bringen, wobei das System (1) konfiguriert ist, sodass während dem Gebrauch das thermostatische Mischventil (5) die Temperatur und die Durchflussmenge des Sekundärfluids durch teilweises Öffnen oder vollständiges Schließen der zweiten Einlassöffnung (4) entsprechend der Temperatur (Tc) des Sekundärfluids entsprechend der ersten Einlassöffnung (3) zum Beibehalten der Wärmeschichtung des Sekundärfluids innerhalb des Speichers (2) zu verstellen.

3. System (1) nach den vorstehenden Ansprüchen, **dadurch gekennzeichnet, dass** das thermostatische Mischventil (5) konfiguriert ist, sodass während dem Gebrauch,
wenn die Temperatur (Tc) des Sekundärfluids entsprechend der Warmeinlassöffnung (3) des thermostatischen Mischventils (5) gleichwertig oder niedriger als eine erste voreingestellte Temperatur (T1) ist, das thermostatische Mischventil (5) die zweite Einlassöffnung (4) schließt oder geschlossen hält, wodurch der Durchfluss des Sekundärfluids von der unteren Öffnung (14) verhindert ist, um es dem Sekundärfluid zu erlauben, zwischen dem dritten (16), ersten (18) und vierten (17) Abschnitt des Sekundärkreislaufs (11) zum Erwärmen des Sekundärfluids innerhalb des Sekundärkreislaufs (11) zu fließen,
wenn die Temperatur (Tc) des Sekundärfluids entsprechend der Warmeinlassöffnung (3) des thermostatischen Mischventils (5) höher als eine erste voreingestellte Temperatur (T1) ist, das thermostatische Mischventil (5) die zweite Einlassöffnung (4) öffnet oder teilweise oder vollständig geöffnet hält, wodurch die Durchflussmenge des Sekundärfluids durch die zweite Einlassöffnung (4) auf eine Weise variiert wird, die im Verhältnis zu dem Unterschied zwischen der Temperatur (Tc) des Sekundärfluids entsprechend der Warmeinlassöffnung (3) und der voreingestellten Temperatur (T1) zum Einführen des erwärmten Sekundärfluids in die zweite Öffnung (15) zum Wärmeschichten innerhalb des Speichers (2) liegt.

4. System (1) nach einem der vorstehenden Ansprüche, **dadurch gekennzeichnet, dass** der Wärmetauscher (7) einen Primärkreislauf (10) für den Durchfluss eines erwärmten Primär-Wärmeträgerfluids anhand eines externen Wärmemittels, z. B. einer Wärmepumpe, umfasst, wobei der Primärkreislauf (10) in direktem oder indirektem Wärmekontakt mit dem Wärmetauschabschnitt (18) des Sekundärkreislaufs (11) entsprechend dem Wärmetauscher (7) zum Erwärmen des Sekundärfluids steht.

5. System (1) nach Anspruch 3 oder 4, wenn abhängig von Anspruch 3 **dadurch gekennzeichnet, dass** die Zirkulationspumpe (19) entsprechend dem dritten Abschnitt (16) des Sekundärkreislaufs (11) angeordnet ist, um das Sekundärfluid von dem zweiten Abschnitt (12) und/oder von dem vierten Abschnitt (17) des Sekundärkreislaufs (11) einzulassen.

6. System (1) nach einem der vorstehenden Ansprüche, **dadurch gekennzeichnet, dass** es weiter ein Verstellsystem der Temperatur des Sekundärfluids in dem Sekundärkreislauf (11) entsprechend der Temperatur umfasst, die an einem oder mehreren Höhenpegeln des Speichers (2) erfasst wird, um das Erwärmen des Sekundärfluids entsprechend dem Wärmetauscher (7) zu unterbrechen, wenn eine zweite voreingestellte Temperatur (T₂) an einem vorbestimmten Pegel des Speichers (2) erreicht ist.

7. System (1) nach dem vorstehenden Anspruch, **dadurch gekennzeichnet, dass** das Verstellsystem Erfassungsmittel umfasst, wie z. B. Sonden, die an einem oder mehreren Pegeln des Speichers (2) angeordnet sind, die in der Lage sind, die Temperatur des Sekundärfluids an dem entsprechenden Pegel des Speichers (2) zu erfassen.

8. System (1) nach einem der vorstehenden Ansprüche, wenn abhängig von Anspruch 2 **dadurch gekennzeichnet, dass** der zweite Abschnitt (12) des Sekundärkreislaufs (11) geeignet ist, innerhalb des Speichers (2) eingeführt zu werden oder geeignet ist, außerhalb des Speichers (2) angeordnet zu werden.

9. System (1) nach einem der vorstehenden Ansprüche, **dadurch gekennzeichnet, dass** das thermostatische Mischventil (5) direkt mit der Zirkulationspumpe (19) verbunden ist.

10. Warmwasserspeicher, umfassend einen Speicher (2), der einen unteren Abschnitt und einen oberen Abschnitt aufweist, und ein Wärmetausch- und Wärmeschichtungssystem (1) nach einem der vorstehenden Ansprüche.

11. Warmwasserspeicher nach dem vorstehenden Anspruch, **dadurch gekennzeichnet, dass** der Speicher (2) einer der geschlossenen Behälterarten ist.

## Revendications

1. Système d'échange thermique et de stratification thermique (1) pour un fluide secondaire contenu dans un réservoir (2), tel qu'un réservoir d'eau chaude, ledit réservoir (2) ayant une partie supérieure et une partie inférieure,
ledit système (1) comprenant un circuit secondaire (11), pour l'écoulement du fluide secondaire, ledit circuit secondaire (11) étant susceptible d'être en connexion fluidique avec la partie supérieure et la partie inférieure dudit réservoir (2),
ledit système (1) comprenant en outre une pompe de circulation (19), susceptible d'agir sur ledit circuit secondaire (11) pour la circulation dudit fluide secondaire depuis la partie inférieure vers la partie supérieure dudit réservoir (2) à travers ledit circuit secondaire (11), un échangeur thermique (7), apte à agir sur une partie (18) dudit circuit secondaire (11) susceptible de chauffer ledit fluide secondaire avant son introduction dans la partie supérieure dudit réservoir (2), et un clapet mélangeur thermostatique (5), susceptible d'agir sur ledit circuit secondaire (11) de telle sorte que, pendant l'utilisation, ledit clapet mélangeur thermostatique (5) ajuste la température et le débit dudit fluide secondaire à travers ledit circuit secondaire (11) en fonction de l'échange thermique avec ledit échangeur de chaleur (7) pour garder la stratification thermique du fluide secondaire à l'intérieur dudit réservoir (2),
ledit système (1) étant **caractérisé en ce que** ledit clapet mélangeur thermostatique (5) comporte un premier orifice d'entrée ou orifice d'entrée chaude (3), en connexion fluidique avec la partie (17) du circuit secondaire (11) susceptible d'être en connexion fluidique avec la partie supérieure du réservoir (2), un second orifice d'entrée ou orifice d'entrée froide (4), en connexion fluidique avec la partie (12) du circuit secondaire (11) susceptible d'être en connexion fluidique avec la partie inférieure du réservoir (2), et un orifice de sortie (6), en connexion fluidique avec une partie (16) du circuit secondaire (11) en connexion fluidique avec la partie (18) du circuit secondaire (11) en correspondance avec ledit échangeur de chaleur (7) et **en ce que** ledit clapet mélangeur thermostatique (5) est configuré de telle sorte que, pendant l'utilisation,
lorsque la température (Tc) du fluide secondaire en correspondance dudit clapet mélangeur thermostatique (5) est égale ou est inférieure à une première température prédéfinie (T1), ledit clapet mélangeur thermostatique (5) empêche l'écoulement dudit fluide secondaire depuis la partie inférieure dudit réservoir (2) afin de permettre au fluide secondaire restant de s'écouler dans ledit circuit secondaire (11) seulement entre ledit échangeur de chaleur (7) et ledit clapet mélangeur thermostatique (5) passant entièrement par le premier orifice d'entrée (3) jusqu'à l'orifice de sortie (6) pour chauffer ledit fluide secondaire,
lorsque la température (Tc) du fluide secondaire en correspondance dudit clapet mélangeur thermostatique (5) est supérieure à ladite température prédéfinie (T1), ledit clapet mélangeur thermostatique (5) fait varier le débit dudit fluide secondaire à travers cette dernière d'une manière proportionnelle à la différence entre la température (Tc) du fluide secondaire et la température prédéfinie (T1), pour l'introduction dudit fluide secondaire dans la partie supérieure dudit réservoir (2) pour conserver la stratification thermique dudit fluide secondaire à l'intérieur dudit réservoir (2).

2. Système (1) selon la revendication précédente, **caractérisé en ce que** ledit circuit secondaire (11) comporte un premier orifice ou orifice inférieur (14), susceptible d'être en connexion fluidique avec la partie inférieure du réservoir (2) pour l'admission du fluide secondaire en provenance dudit réservoir (2), et un second orifice ou orifice supérieur (15), susceptible d'être en connexion fluidique avec la partie supérieure du réservoir (2) pour l'introduction du fluide secondaire dans le réservoir (2), **en ce que** ledit circuit secondaire (11) comprend en outre une première partie ou partie d'échange thermique (18) en correspondance dudit échangeur de chaleur (7) pour chauffer ledit fluide secondaire, une deuxième partie (12), susceptible de mettre en connexion fluidique ledit orifice inférieur (14) avec ledit second orifice d'entrée (4) dudit clapet mélangeur thermostatique (5), une troisième partie (16), susceptible de mettre en connexion fluidique ledit orifice de sortie (6) dudit clapet mélangeur thermostatique (5) et ladite première partie (18) du conduit secondaire (11), et une quatrième partie (17) susceptible de mettre en connexion fluidique ladite première partie (18) à la fois avec ledit orifice d'entrée chaude (3) dudit clapet mélangeur thermostatique (5) et à la fois avec ledit orifice supérieur (15), ledit système (1) étant configuré de telle sorte que, pendant l'utilisation, ledit clapet mélangeur thermostatique (5) ajuste la température et le débit dudit fluide secondaire en ouvrant, fermant partiellement ou totalement ledit second orifice d'entrée (4) en fonction de la température (Tc) dudit fluide secondaire en correspondance dudit premier orifice d'entrée (3) pour conserver la stratification thermique du fluide secondaire à l'intérieur dudit réservoir (2).

3. Système (1) selon la revendication précédente, **caractérisé en ce que** ledit clapet mélangeur thermostatique (5) est configuré de telle sorte que, pendant l'utilisation,
lorsque la température (Tc) du fluide secondaire en correspondance de l'orifice d'entrée chaude (3) dudit clapet mélangeur thermostatique (5) est supérieure à ladite température prédéfinie (T1), ledit clapet mélangeur thermostatique (5) ferme ou maintient fermé ledit second orifice d'entrée (4), empêchant l'écoulement dudit fluide secondaire depuis l'orifice inférieur (14) afin de permettre au fluide secondaire de s'écouler entre la troisième (16), la première (18) et la quatrième (17) partie du circuit secondaire (11) pour chauffer ledit fluide secondaire à l'intérieur dudit circuit secondaire (11),
lorsque la température (Tc) du fluide secondaire en correspondance dudit orifice d'entrée chaude (3) dudit clapet mélangeur thermostatique (5) est supérieure à ladite température prédéfinie (T1), ledit clapet mélangeur thermostatique (5) ouvre ou maintient partiellement ou totalement ouvert ledit second orifice d'entrée (4), faisant varier le débit dudit fluide secondaire à travers ledit second orifice d'entrée (4) d'une manière proportionnelle à la différence entre la température (Tc) du fluide secondaire en correspondance de l'orifice d'entrée chaude (3) et la température prédéfinie (T1), pour l'introduction dudit fluide secondaire chauffé dans ledit second orifice (15) pour une stratification thermique à l'intérieur dudit réservoir (2).

4. Système (1) selon l'une quelconque des revendications précédentes, **caractérisé en ce que** ledit échangeur de chaleur (7) comprend un circuit primaire (10) pour l'écoulement d'un fluide caloporteur primaire chauffé au moyen d'un moyen de chauffage externe, par exemple une pompe à chaleur, ledit circuit primaire (10) étant en contact thermique direct ou indirect avec ladite partie d'échange thermique (18) dudit circuit secondaire (11) en correspondance dudit échangeur de chaleur (7) pour chauffer ledit fluide secondaire.

5. Système (1) selon la revendication 3 ou 4, lorsqu'elle dépend de la revendication 3, **caractérisé en ce que** ladite pompe de circulation (19) est agencée en correspondance de la troisième partie (16) du circuit secondaire (11) afin d'admettre le fluide secondaire en provenance de la deuxième partie (12) et/ou en provenance de la quatrième partie (17) du circuit secondaire (11).

6. Système (1) selon l'une quelconque des revendications précédentes, **caractérisé en ce qu'**il comprend en outre un système d'ajustement de la température dudit fluide secondaire dans ledit circuit secondaire (11) en fonction de la température détectée à un ou plusieurs niveaux de hauteur dudit réservoir (2) afin d'interrompre le chauffage dudit fluide secondaire en correspondance dudit échangeur de chaleur (7) lorsqu'il atteint une seconde température prédéfinie (T2) à un niveau déterminé dudit réservoir (2).

7. Système (1) selon la revendication précédente, **caractérisé en ce que** ledit système d'ajustement comprend un moyen de détection, par exemple des sondes, agencé, à un ou plusieurs niveaux dudit réservoir (2), susceptible de détecter la température dudit fluide secondaire au niveau respectif dudit réservoir (2).

8. Système (1) selon l'une quelconque des revendications précédentes, lorsqu'elles dépendent de la revendication 2, **caractérisé en ce que** ladite deuxième partie (12) du circuit secondaire (11) est susceptible d'être insérée à l'intérieur dudit réservoir (2) ou est susceptible être agencée à l'extérieur dudit réservoir (2).

9. Système (1) selon l'une quelconque des revendications précédentes, **caractérisé en ce que** ledit clapet mélangeur thermostatique (5) est directement relié à ladite pompe de circulation (19).

10. Réservoir d'eau chaude comprenant un réservoir (2) ayant une partie inférieure et une partie supérieure et un système d'échange thermique et de stratification thermique (1) selon l'une quelconque des revendications précédentes.

11. Réservoir d'eau chaude selon la revendication précédente, **caractérisé en ce que** ledit réservoir (2) est d'un type de réservoir fermé.
